# EUROPEAN PATENT APPLICATION

(11) **EP 4 852 463 A1**
(43) Date of publication of application: **09.12.2026**
(21) Application number: 25180152.8
(22) Date of filing: 02.06.2025
(51) Int. Cl.: H04W 4/021, H04W 24/10, H04W 40/24, H04W 48/02, H04W 48/04, H04W 48/16, H04W 12/08

(54) **METHOD, APPARATUS AND COMPUTER PROGRAM FOR CONTROLLING SERVICE ACCESS OF USER EQUIPMENT IN A MOBILE COMMUNICATION SYSTEM**

(71) Applicant: Deutsche Telekom AG, 53113 Bonn (DE)
(72) Inventor: ZINGLER, Olaf, 53227 Bonn (DE); KLATT, Axel, 50999 Köln (DE)
(74) Representative: 2SPL Patentanwälte PartG mbB

(57) **Abstract**

Provided are a method, an apparatus and a computer program for controlling service access of user equipment, UE, in a mobile communication system. The method (10) comprises registering (12) the UE (200; 202; 204; 206) in a cell (312) of the mobile communication system (400; 500; 600) based on a first signal received at the UE (200; 202; 204; 206) from a base station (300; 302; 311) of the mobile communication system (400; 500; 600) and obtaining (14) measurement results, which are based on measuring at least one second signal received from a radio transmitter (310; 321; 331; 350), being different from the base station (300; 302; 311), at the UE (200; 202; 204; 206). The method (10) further comprises controlling (16) access to services of the cell (312) of the mobile communication system (400; 500; 600) dependent/based on the measurement results.

## Description

### Field

The present disclosure relates to a method, an apparatus and a computer program for controlling service access of user equipment, UE, in a mobile communication system, more particularly, but not exclusively to a concept for effective service access control in mobile communication systems.

### Background

Service access control in mobile communication systems encompasses a crucial set of mechanisms designed to manage and regulate how users and their devices connect to network services and consume resources. The primary objective is to protect the network from overload and ensure stable, equitable service delivery to all subscribed users. This involves preventing an excessive number of users or service requests from overwhelming network elements, particularly the radio access network (RAN) and the core network. Effective access control helps maintain quality of service (QoS) by ensuring that admitted users receive the necessary resources for their requested services, such as voice calls, data sessions, or emergency communications. It also plays a role in enforcing subscription policies and barring access to unauthorized users or devices, thereby contributing to the overall security and integrity of the mobile network.

To implement service access control, mobile networks employ various techniques. Admission control, for instance, is a fundamental mechanism that decides whether to accept or reject a new service request based on the current network load and available resources; this can involve algorithms that predict resource availability and prioritize certain types of traffic. Access barring is another common method, where the network can restrict access for certain classes of users or even all users in a specific area during periods of extreme congestion, often with exceptions for emergency calls. Furthermore, networks can utilize differentiated access policies, giving preferential treatment to high-priority users (e.g., emergency services, premium subscribers) or specific types of services that are more delay-sensitive. These controls can be applied at various points, from initial network entry and registration to the establishment of individual service bearers, ensuring a robust and manageable communications environment.

Service access control in mobile communication systems encompasses a critical set of security mechanisms designed to ensure that only authorized users and devices are permitted to access network resources and services, thereby protecting the integrity, confidentiality, and availability of the mobile network. The primary objectives are to prevent unauthorized use, safeguard user data and privacy, protect network infrastructure from attacks, and manage resource allocation efficiently, especially in congested conditions or during emergencies. This involves verifying the identity of the subscriber and the device, often through mechanisms like SIM/USIM (Universal Subscriber Identity Module) authentication, and then authorizing the requested services based on subscription profiles, device capabilities, current network status, and any applicable policies. Effective access control is fundamental to maintaining the trustworthiness of the mobile ecosystem and enabling a wide array of secure mobile services.

There are some situations in which operators need to restrict service access for certain user groups, which may be due to the respective scenario, or it may also be required by government regulations. For example, cell phone use should be restricted in a theater, cinema or generally in a restricted service area.

### Summary

Examples are based on the finding that service access can be controlled using the measurement capabilities of UEs and additional radio transmitters to be measured. UEs conduct measurements for purposes of cell selection and handover. The UEs can be configured to measure multiple signals and the measurement results are indicative of a location of the UE. The radio environment is typically established by multiple radio transmitters and therefore different locations would have different radio signal constellations or radio signatures. The radio signal constellation or characteristics reflected in the measurement results can then be used to control service access. For example, if the measurement results indicate that the UE is in an area of restricted access a service access request from such a UE can be denied.

Examples therefore provide a method for controlling service access of user equipment, UE, in a mobile communication system. The method comprises registering the UE in a cell of the mobile communication system based on a first signal received at the UE from a base station of the mobile communication system. The method also includes obtaining measurement results, which are based on measuring at least one second signal received from a radio transmitter at the UE. The radio transmitter is different from the base station. The method further comprises controlling access to services of the cell of the mobile communication system dependent/based on the measurement results. Examples may therewith provide an efficient concept for service access control that allows operators to efficiently detect whether the UE is at a location (reflected in the measured results) for which services shall be allowed or disallowed.

For example, the controlling of the method comprises denying service access for the UE if the measurement results indicate that the UE is in a non-service area. Hence, for a specific area in which a certain service should not be provided, measurement results may be characteristic. For example, if a separate radio transmitter is used to mark such an area, the signal strength of the second signal may be indicative for a distance between a UE and the radio transmitter. Therewith a signal strength measurement of the second signal may indicate whether the UE is inside or outside such an area. Service denial or service acceptance may then depend on the measurement results. In examples, the controlling of access may comprise evaluating a signal strength of the second signal against predefined signal strength characteristics being indicative for the UE to be inside or outside the non-service area. Furthermore, the obtaining may further comprise determining a timing advance value for the cell of the mobile communication system. The controlling may further be based on the timing advance value. The obtaining of the measurement results may further comprise a timing advance value. The determining of the timing advance value may be based on the first signal. The timing advance value may then be used to verify the location of the UE. E.g. the timing advance value may be evaluated against predetermined characteristics and the timing advance evaluation may be combined with the signal strength evaluation of the second signal to form a basis for access control. For example, the timing advance value may be used to determine whether a UE is in a desired or non-service zone and the signal characteristics of the second signal may then be used in addition.

Furthermore, at least in some examples the controlling comprises denying service access for the UE if the UE has not measured the second signal. Thereby, if a UE does not provide or measure the second signal, examples allow service denial, e.g. as a safety measure. At least in some examples the denying is time-limited by a pre-defined denial time. Examples may therewith avoid too frequent service (re-) requests. The predefined denial time may be indicated by a network entity of the mobile communication system. This may allow an operator to coordinate the number of requests in a certain area.

In further examples the method may further comprise detecting an identifier from the second signal, providing the identifier with the measurement results, and controlling access to services further based on the identifier, wherein the identifier is static or dynamic. Examples therewith enable an extra safety measure, as the identifier may assure that the UE has indeed measured the correct second signal. By changing the identifier over time (using a dynamic identifier) additional reliability for the correct measurements can be introduced.

The method may further comprise using an indication on whether the second signal should be measured at the UE and the obtaining of the measurement results may be performed after the indication is provided. This allows a network entity, e.g. an access point to indicate to the UE when/if the second signal should be measured. This allows different time schedules and areas (some cells use it and others do not) for the measurement mechanism. Moreover, in some examples the obtaining of the measurement results is performed after a service request of the UE. This may contribute to the efficiency of the method, as the measurements might not be conducted when no service is requested. For example, a radio frequency of the second signal is determined after the service request. Hence, the UE may determine which frequency band to measure only after a service has been requested, e.g. by reading according the information from a broadcast signal or by receiving dedicated signaling.

In further examples the obtaining of the measurement results may comprise using a measurement report to represent the measurement results. The measurement report may be empty in case the second signal is too weak to be measured. In that case the measurement report is always available and a decision on the service access can depend on the measurement report, even if it is empty. The controlling of the access may be further based on a signal strength threshold for the second signal. This enables a simple detection mechanism by threshold comparison. Furthermore, the controlling of access may be further based on a user identification (ID) of the UE and/or a database indicating a service policy. The user ID may then be used to check whether this specific user has service restrictions or not, which may be stored and provided from a database.

Another example is an apparatus for user equipment of a mobile communication system. The apparatus comprises one or more interfaces configured to communicate in the mobile communication system and one or more processing devices configured to process signals communicated in the mobile communication system using the one or more interfaces. The one or more processing devices are further configured to perform one of the methods as described herein. Another example is a UE comprising the apparatus.

Yet another example is an apparatus for a network entity of a mobile communication system. The apparatus comprises one or more interfaces configured to communicate in the mobile communication system and one or more processing devices configured to process signals communicated in the mobile communication system using the one or more interfaces. The one or more processing devices are further configured to perform one of the methods described herein. Another example is a network entity comprising the apparatus.

A system comprising an example of a UE and an example of a network entity is yet another example. A further example is a computer program having a program code for performing one of the methods described herein, when the computer program is executed on a computer, a processor, or a programmable hardware component.

### Brief description of the Figures

Some examples of apparatuses, methods, and/or computer programs will be described in the following by way of example only, and with reference to the accompanying figures, in which
Fig. 1 shows a block diagram of an example of a method for controlling service access of a UE in a mobile communication system;
Fig. 2 depicts block diagrams of examples of an apparatus for a UE, a UE, an apparatus for a network entity, a network entity, and a mobile communication system;
Fig. 3 shows another example of a mobile communication system; and
Fig. 4 illustrates block diagrams of further examples of an apparatus for a UE, a UE, an apparatus for a network entity, a network entity, and a mobile communication system.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

In some countries or jurisdictions, a Federal Network Agency may request from mobile network operators as part of their radio frequency conditions that mobile communication services via the actioned/prolonged etc. frequency bands shall be prohibited in certain areas or under certain circumstances. For example, during events or at certain locations mobile communication should not be allowed. Examples are events that require silence (theaters, cinemas, opera, court room, etc.). Other examples are that communication should be disabled, e.g. for criminals or terrorists which are known to be in a certain area. A mobile operator might choose to restrict or deny services to users in a variety of situations, primarily to protect its network integrity, ensure fair usage, and comply with legal or contractual obligations. Violation of the operator's terms of service, which might include illegal activities conducted over the network or sending spam, can also lead to service denial. Finally, legal and regulatory mandates, such as court orders or government directives related to national security or law enforcement investigations, can compel an operator to restrict or deny services to specific individuals.

Radio frequency- (RF) jammers can be used to disable access to public mobile communications. However, especially if e.g. new frequency bands are assigned by the Federal Network Agency to mobile operators, the update/extension of the existing solutions is expensive, or other reasons exist that now the mobile network operators are in charge to avoid unwanted mobile communication via public mobile communication systems from certain users in dedicated and defined locations.

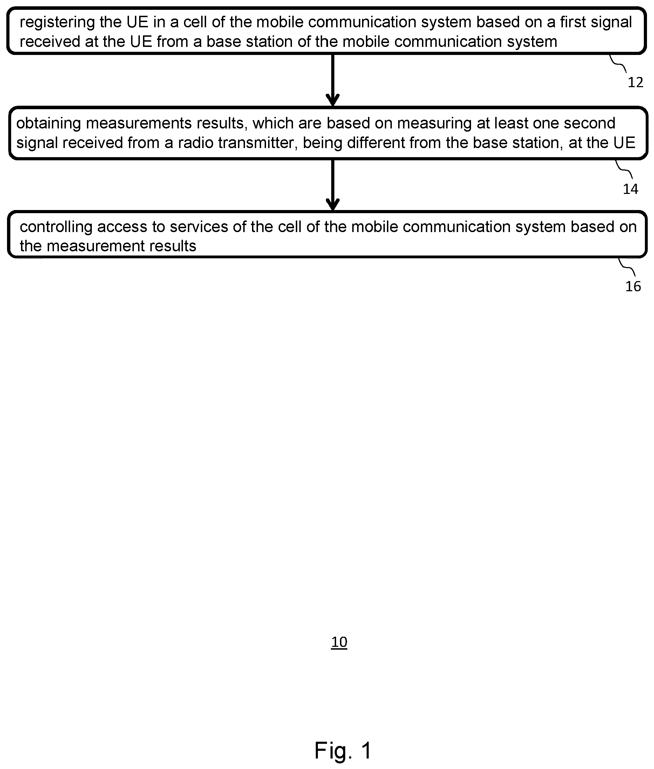

Fig. 1 shows a block diagram of an example of a method 10 for controlling service access of UE in a mobile communication system. The method 10 comprises registering 12 the UE in a cell of the mobile communication system based on a first signal received at the UE from a base station of the mobile communication system and obtaining 14 measurements results, which are based on measuring at least one second signal received from a radio transmitter, being different from the base station, at the UE. The method 10 further comprises controlling 16 access to services of the cell of the mobile communication system dependent/based on the measurement results.

The controlling 12 of the service access may include granting or denying access to certain services for the UE. The method 10 may be performed at a UE or at a network entity, such as a base station or a core network node. Typically, an access node (e.g. a base station or Node B) broadcasts signals and information (the first signal), which are received and interpreted at the UE. Assuming that the UE is authorized for access (e.g. by subscription with the respective operator), the UE then registers or camps on a cell of the mobile communication system. According to the above method 10, measurement results are obtained based on measuring at least one second signal from another radio transmitter. This other radio transmitter may be, in some examples, another cell or base station of the very same mobile communication system. It could as well be a base station from another mobile communication system, e.g. another access technology or even another operator. Another option for the radio transmitter is to use a dedicated radio transmitter, which is installed for the purpose of providing the second signal, e.g. a re-used former jammer or radio marker. Controlling 16 of the access may then be carried out on the network side or at the UE, as will be detailed subsequently.

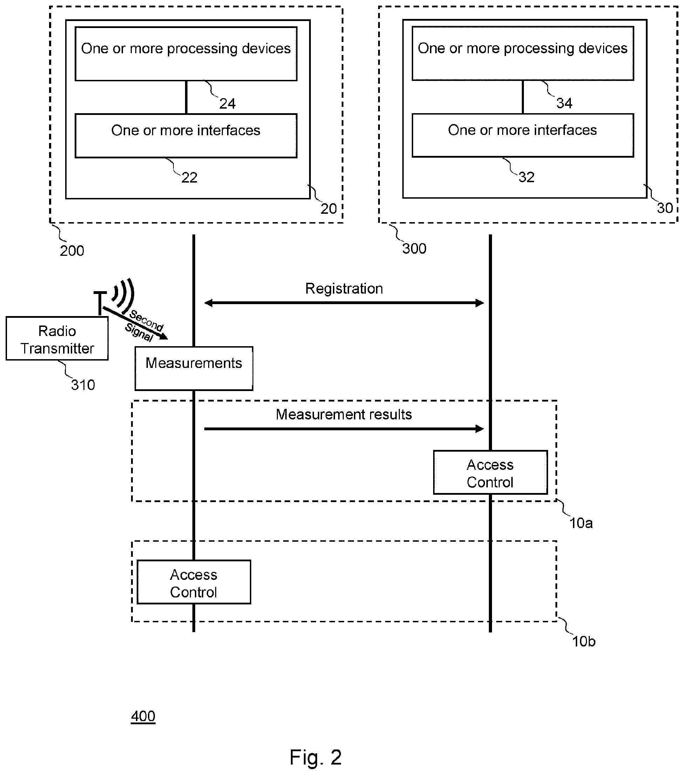

Fig. 2 depicts block diagrams of examples of an apparatus 20 for a UE 200, a UE 200, an apparatus 30 for a network entity 300, a network entity 300, and a mobile communication system 400. The apparatus 20 for the UE 200 comprises one or more (radio) interfaces 22, which are configured to communicate in the mobile communication system 400. The one or more interfaces 22 are coupled to one or more processing devices 24. The one or more processing devices 24 are configured to process signals communicated in the mobile communication system 400 using the one or more interfaces 22. The one or more processing devices 24 are further configured to perform one of the methods 10 as described herein. Fig. 2 further illustrates an example of a UE 200 comprising an example of the apparatus 20. The UE 200 is shown in dotted lines as it is optional from the perspective of the apparatus 20.

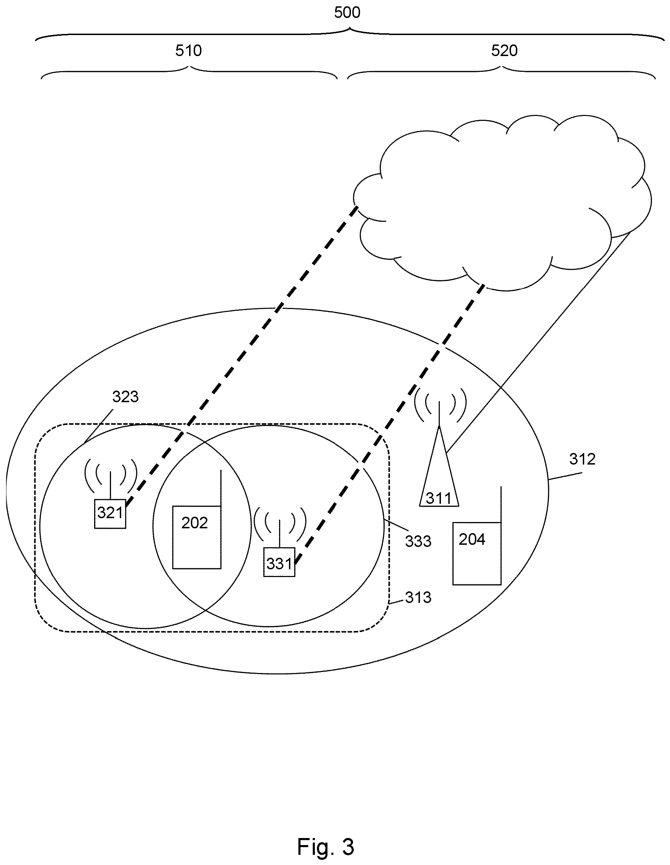

The apparatus 30 for the network entity 300 of the mobile communication system 400 comprises one or more interfaces 32, which are configured to communicate in the mobile communication system 400. The one or more interfaces 32 are coupled to one or more processing devices 34. The one or more processing devices 34 are configured to process signals communicated in the mobile communication system 400 using the one or more interfaces 32. The one or more processing devices 34 are further configured to perform one of the methods 10 as described herein. Fig. 3 further illustrates an example of a network entity 300 comprising an example of the apparatus 30. The network entity 300 is shown in dotted lines as it is optional from the perspective of the apparatus 30. As further shown in Fig. 2 the mobile communication system 400 comprises at least one example of the UE 200 and at least one example of the network entity 300.

The one or more interfaces 22, 32 may serve as interface for communicating in the communication system 400. The one or more interfaces 22, 22 may correspond to one or more inputs and/or outputs for receiving and/or transmitting information, which may be in digital (bit) values or analog according to a specified code or protocol, within a module, between modules or between modules of different entities. For example, an interface may comprise interface circuitry configured to receive and/or transmit information. In examples an interface may comprise any means for obtaining, receiving, transmitting or providing analog or digital signals or information, e.g., any connector, contact, pin, register, input port, output port, conductor, lane, etc., which allows providing or obtaining a signal or information. The one or more interfaces 22, 32 may be configured to communicate (transmit, receive, or both) in a wireless and/or wired manner and it may be configured to communicate, i.e., transmit and/or receive signals, information with further internal or external components.

The one or more interfaces 22, 32 or the apparatuses 20, 30 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more du-plexers, one or more diplexers, one or more filters or filter circuitry, one or more converters, one or more mixers, accordingly adapted radio frequency components, one or more antennas, etc. For example, the respective one or more interfaces 22, 32 may enable radio communication with UEs and communication between base stations, which can be directly and/or indirectly, wired and/or wireless, respectively.

The one or more processing devices 24, 34 may be implemented using one or more processing units, one or more circuitries, any means for processing, such as a processor, a computer or a programmable hardware component being operable with accordingly adapted software. In other words, the described function of the one or more processing devices 24, 34 may as well be implemented in software, which is then executed on one or more programmable hardware components. Such hardware components may comprise a general-purpose processor, a Digital Signal Processor (DSP), a micro-controller, etc.

A network entity, e.g. a base station or a network function controlling one or more base station, may generate one or more cells of a cellular system and/or the network entity may be in the fixed or stationary part of the network or system. A network entity may correspond to a remote radio head, a transmission point, an access point, a macro cell, a small cell, a micro cell, a pico cell, a femto cell, a metro cell etc. A network entity can be a wireless interface or control one or more wireless interfaces of a wired network, which enables transmission and reception of radio signals to a communication device. Such a radio signal may comply with radio signals as, for example, standardized by the Third Generation Partnership Project (3GPP) or, generally, in line with one or more of the systems described herein. Thus, a network entity may be a base station and may correspond to, a NodeB, an eNodeB, an ngNB, a gNB, a BTS (Base Transceiver Station), an access point, etc. In case of a moving implementation in a satellite, an airplane, etc. the link towards a core network of the communication system may also be implemented in a wireless manner.

The mobile communication system 400 may hence be cellular. The term cell refers to a coverage area of radio services provided by a transmission point, a remote unit, a remote head, a remote radio head, communication device, network entity or a NodeB, an eNodeB, an ngNB, a gNB, a beam and a satellite, respectively. The terms cell and base station may be used synonymously, a base station may generate multiple cells and it may be implemented in a high-altitude platform, a plane, a drone, a satellite, as a ground station, etc. A wireless communication device, e.g., the communication device or UE, can be registered or associated with at least one cell (e.g., the network entity), e.g., it can be associated to a cell such that data can be exchanged between the network and the mobile in the coverage area of the associated cell using a dedicated channel, connection or link.

The mobile communication system 400 may further comprise a core network, with multiple further network nodes/entities. A network node/entity may hence be a server, router or processing component in the mobile communication system 400. One specific network node may also be configured to carry out the above-described method 10 and may comprise the above-described apparatus 30.

In general, the UE may be a communication device that is capable of communicating wirelessly. In particular, however, the communication device may be a mobile communication device, e.g., a communication device that is suitable for being carried around by a user. For example, the communication device may be a User Terminal (UT) or User Equipment (UE) within the meaning of the respective communication standards being used for mobile communication. For example, the communication device may be a mobile phone, such as a smartphone, or another type of mobile communication device, such as a smartwatch, a laptop computer, a tablet computer, or autonomous augmented-reality glasses. The communication device may be in a vehicle, a car, a bus, a truck, a construction and/or agricultural machinery, a train, an airplane, a boat, a ship, a cruise ship, an Internet of Things (IoT) device, a logistics application, etc. For example, the communication device and the network entity may be configured to communicate in a cellular mobile communication system. Accordingly, the communication device and the network entity may be configured to communicate in a cellular mobile communication system, for example in a Sub-6GHz-based cellular mobile communication system (covering frequency bands between 400 MHz and, in the meantime, 7 GHz), in a mmWave-based cellular mobile communication system (covering frequency bands between 24 GHz and 71 GHz) or in the so-called mid-bands (covering frequency bands between 7 GHz and 24 GHz). For example, the communication device and the network entity may be configured to communicate in a mobile communication system/cellular mobile communication system.

In general, the mobile communication system 400 may, for example, correspond to one of the 3GPP-standardized mobile communication networks, where the term mobile communication system is used synonymously to mobile communication network. The mobile communication system may correspond to, for example, a 6^{th} Generation system (6G), a 5th Generation system (5G), a New Radio (NR) system, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

As further shown in Fig. 2 underneath the block diagram in the sequence chart the UE 200 and network entity 300 may actively communicate to register the UE 200 in a cell of the mobile communication system 400. Fig. 2 also illustrates a radio transmitter 310, which may be a different cell, a different network entity, a different base station, a jammer, a radio beacon, or any radio transmitter. As shown the radio transmitter 310 transmits the second signal, which is then measured by the UE 200 to obtain the measurement results. There are principally several options for controlling the service access based on the measurement results. Fig. 2 shows a first option 10a, namely the UE 200 communicates (transmits) the measurement results to the network entity 300 (the network entity 300 receives measurement results) and the network entity 300 decides on the service access based on the measurement results. A second option 10b is also illustrated, namely the UE 200 decides on service access based on the measurement results right away. Such a mechanism may be implemented in an operating system, an application or in the protocol stack of the UE 200. The network entity 300 may the just signal (e.g. broadcast or dedicated signaling) to the UE 200 that the respective service control mechanisms should apply.

Examples may provide a standardized solution with low efforts for installation, operation and maintenance for a premises owner/-operator and public mobile network operators. On the other side there is also a chance to reuse existing equipment, if necessary modifications are possible and allowed, of the premises owner or to use standardized radio equipment from a mobile network operator. Examples may resolve the dependency from the need to extend or exchange currently used solutions, like jammers, in case of introduction of new frequency bands for mobile communication purposes.

Fig. 3 shows another example of a mobile communication system 500. Fig. 3 illustrates an access network 510 with a base station (network entity) 311, which operates a radio cell 312. Fig. 3 further illustrates UE 202 and UE 204 as well as two radio transmitters 321 and 331. The area 313 marks an area in which mobile services should be denied. Areas 323 and 333 mark coverage areas of radio transmitters 321 and 331 (areas, in which a certain signal strength of the radio transmitter 321, 331 can be measured). The base station 311, and in some examples optionally also radio transmitters 321 and 331, is/are controlled by core network 520. Examples may use radio measurement capabilities of the UE 202 or 204 to measure a second radio network (321, 323 or 331, 333) and decide as part of the communication in the first (radio) access network 311, based on those measurements of the second radio network, if the user equipment 202 or 204 is allowed to setup a communication service in the first mobile communication network 500 or to reject this service request.

In some examples, the area 313 may further be determined using the timing advance measurement capability of a network entity or UE 202, 204. Timing advance is a crucial measurement in 3GPP systems, like LTE and 5G, ensuring that uplink transmissions from UEs arrive at the base station (e.g., gNB or eNB) in a synchronized manner. Since UEs are at varying distances from the base station, their signals experience different propagation delays. To compensate for this, the base station measures the arrival time of a UE's uplink signal (often using a random-access preamble or dedicated sounding reference signals) and calculates the necessary timing advance value. This value is then signaled back to the UE, instructing it to adjust its transmission timing, effectively "advancing" its transmissions so they align with the expected receive window at the base station. This process is vital for maintaining orthogonality between users in the uplink, preventing inter-symbol interference, and ensuring efficient utilization of radio resources. The accuracy of timing advance measurements and adjustments directly impacts uplink performance and overall network capacity. In some examples the timing advance may be used as distance indicator for the distance between a UE 202, 204 and the base station. Therewith it can also be used as indication on whether a UE 202, 204 is inside or outside the non-service area 313. The timing advance value may directly relate to a distance range between a UE 202, 204 and a base station 311. The obtaining 14 may hence further comprise determining a timing advance value for the cell 312 of the mobile communication system 500. The controlling 16 may be further based on the timing advance value.

It is intended to differentiate the coverage area, such as provided from radio cell 312 of the mobile communication network 500 with its base stations entity 311, into (sub-) areas with limited and non-limited mobile communication service for its connected user equipment's, like 202 and 204, as e.g. requested from German Federal Network Agency "BNetzA" for some cases. Besides this use case, examples can also be used in other scenarios, where mobile communication services shall be limited, like during the performances in cinema halls or theatres, even after floods or earthquakes, etc.

As an example, see Fig. 3, the UE 202 stays in the protection area 313 and the UE 204 is located outside of the area 313. A service request from the mobile communication network 500, such as a voice call, short message service, data transmission or reception, of the UE 202 shall be rejected from base station entity 311. In comparison to UE 202 the service request from UE204 shall be allowed as long as this UE 204 does not report radio field-strength from a RF beacon cell 323 or 333 towards the base station entity 311, which is higher than the allowed maximum field strength threshold. In this example, the controlling 16 of method 10 comprises denying service access for the UE 202 if the measurement results indicate that the UE is in a non-service area 313. Likewise the controlling 16 may comprise denying service access for the UE if the UE has not measured the second signal from 321 or 331. Furthermore, in this example it is assumed that the controlling 16 of the access comprises evaluating a signal strength of the second signal against predefined signal strength characteristics being indicative for the UE to be inside or outside the non-service area 313. For example, the area 313 is assumed to be a building, in which service requests should be denied. The radio transmitters 321, 331 are installed in the building. At the borders of the building certain signal characteristics result, e.g. characteristic relations of the signals from the base station 311, and the signals from radio transmitter 321 or 331 - or both 321 and 331.

For this purpose the "to be protected area" 313 is equipped with RF beacon entities, such as 321, 331, which provide sufficient coverage to cover with their RF beacon cells 323, 333 the "to be protected area" 313. The RF beacon entities itself may provide downlink radio signals in a frequency band supported by the UEs 202, 204. Their RF field-strengths form the coverage area of the RF beacon cells 323, 333. Based on the intention, the RF beacon entities 321, 331 can be dedicated radio equipment just used for this purpose, existing radio equipment of an owner (like modified jammer) or any other kind of (a second) mobile communication network, as long as this can be actively measured (the RF field-strength) by the UE 202 or 204 and reported towards its serving base station entity 311. In the base station entity 311 the measurement reports of the user equipment 202 or 204 shall be analyzed and if the reported field-strength of the RF beacon cell 323 or 333 is above a defined maximum allowed field-strength threshold, the base station entity 311 can decide to reject the service request from UE 202 (in the example of Fig. 3). The decision to reject a service request from UEs with reported RF field-strength higher than an allowed threshold shall be based on a policy, defined and configured from the mobile communication operator of the base station entity 311. The controlling 16 of the access is then based on a signal strength threshold for the second signal (from radio transmitters 321 and/or 331).

Basically, before a new service request, like for example a voice call or data session, can be allowed from based station entity 311, the base station entity 311 requests radio measurements of the radio frequency (-ies) used from RF beacon entity(-ies) 321, 331 from each connected UE, such as 202 and 204, with this base station entity 311. Hence, the configuration data of the base station entity 311 may contain the downlink radio frequency (-ies) from the beacon entity (-ies) deployed in the protection area 313 to be considered in the requested measurement tasks/requests from user equipment's 202, 204. Hence, the method 10 may comprise transmitting information about the radio frequencies to measure from the network entity to the UE.

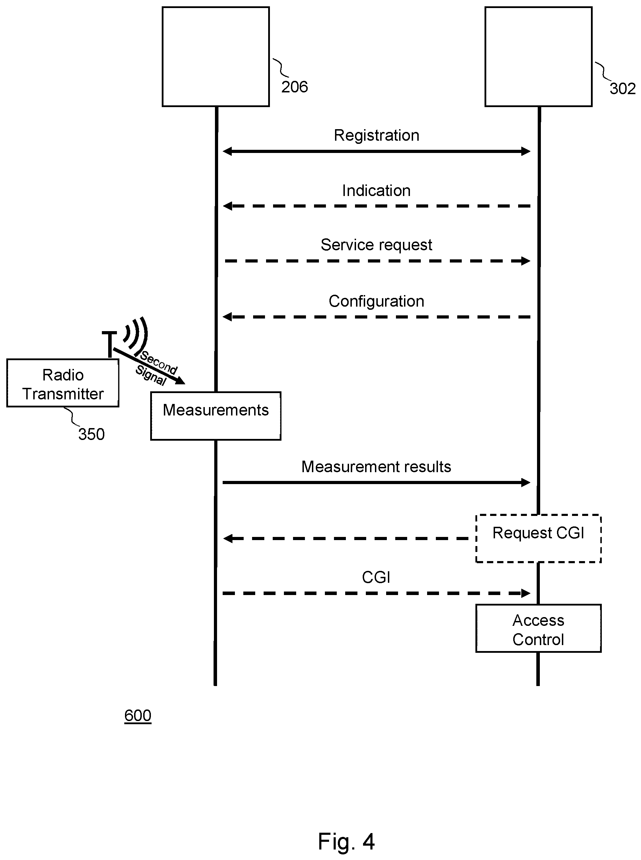

Fig. 4 illustrates message sequences in examples. Fig 4 illustrates the option 1a that has already been outlined in Fig. 2. The UE 206 registers with network entity 302, then measures the second signal from radio transmitter 350, reports the measurement results to the network entity 302, and the network entity 302 controls access by an access decision, which is based on the reported measurement results. As further shown with the dashed arrows in Fig. 4 some optional steps may be carried out before the measurements are actually taken. For example, the method 10 may further comprise using an indication on whether the second signal should be measured at the UE 206. Such an indication may be provided by the network entity 302 in terms of a broadcast indication (e.g. by means of System Information Blocks (SIB)) or a dedicated indication (dedicated control signaling) to the UE 206. The obtaining 14 of the measurement results is then performed after the indication is provided. Additionally or alternatively, the obtaining 14 of the measurement results is performed after a service request of the UE 206. Fig. 4 shows that the indication is received before the service request, however, the UE 206 may first request a service and then receive or read the indication. The network entity 302 may hence transmit the indication in response to receiving a service request from the UE 206. Furthermore, the network entity 300 may provide configuration information to the UE 200 after the service request. For example, a radio frequency of the second signal is determined after the service request. Such information may again be provided/transmitted per dedicated signaling or per broadcast.

The priority of the measurement task with the radio frequency (-ies) of the RF beacon entity 321, 331 as well as the related reporting from the UE 202 or 204 should be "high" (enough) to secure measurements from the UEs 202, 204 of the frequency (-ies) of the RF beacon entities 321, 331. Also, the related reporting of the RF field-strength measurements in measurement reports towards the base station entity 311 shall be managed with high priority to allow the base station entity 311 to decide if the service request has to be rejected or further processed in the mobile communication network 500, 600.

It is expected that these examples may lead to a slightly higher call/session setup time. However, the proposed functionality/procedure can be activated/configured, means limited, just for radio cells, like 312, of the mobile communication network 500, 600 which provide mobile radio coverage in the to be protected area 313. If needed, a margin or a surrounding mobile radio cell - tier can be used and the proposed functionality/procedure may be used as additional safety buffer.

Some examples may make use of empty measurement reports for defined RF beacon frequency (-ies). To secure that measurements of the radio frequency from RF beacon entity 321, 331 are performed and reported from UE 202, 204, even if the user equipment 204 was outside of the coverage area of the RF beacon entity 321, 331 and hence not possible to measure this radio network frequency, an empty measurement report has to be reported towards the base station entity 311 from the UE 204. The obtaining 14 of the measurement results may, in some examples, comprise using a measurement report to represent the measurement results, and the measurement report may be empty in case the second signal is too weak to be measured.

System behavior in case of missing measurement reports may be further specified. In case that the requested measurement report from the UE 202, 204 of the radio frequency from RF beacon entity 321, 331 was not provided UE 202, 204, the base station entity 311 shall react according to a configuration policy, e.g. to reject the service request from the UE 202, 204 due to safety reasons.

Some further examples may use a reduced number of allowed services. The decision, if a service request from a UE, such as 202, which was identified as UE in the protection area 313 should be rejected or allowed can be steered by the type of requested service. Means the decision if a service request will be rejected or allowed, follows a decision matrix in the base station entity 311. This decision matrix can be based on the detailed type of request service from the UE 202. As an example, emergency calls via the user interface 202 or the reception of silence SMS (Short Message Service), can be allowed from the mobile network operator of the access network 510, whereby normal voice call or data session requests are rejected. A silent SMS, sometimes referred to as a Type 0 SMS or a "ping SMS," is a specific kind of Short Message Service message in mobile communication networks that is designed to be delivered to a mobile device without triggering any audible or visual notification for the user. Unlike standard text messages, a silent SMS does not typically appear in the recipient's inbox and is not intended for user interaction. Its primary purpose often lies in network diagnostics, such as verifying if a device is active and connected to the network, or, more controversially, for law enforcement and intelligence agencies to surreptitiously determine a device's location by prompting it to acknowledge receipt to the network, thereby revealing the cell tower it is currently connected to. While these messages are generally invisible to the enduser, their delivery and acknowledgment are logged by the mobile network operator, enabling a form of covert tracking or device status checking.

Some examples may use an identifier of each beacon entity. The pure reporting of measured RF field-strength (measurement results) of radio signals transmitted from beacon entities 321, 331 from UE 202, 204 in the coverage area of radio cell 312 might not be reliable enough to avoid manipulation, like the unwanted extensions of the protected area 313 with installation of additional RF beacon entities in the surrounding of the area 313. Therefore, some examples enable the beacon entity 321, 331 to transmit an own identifier. The UE in the radio cell 312, with task to measure the radio frequency (-ies) of the deployed beacon entity (-ies) shall be able to read and to decode the identifier of the beacon entity 321, 331 transmitted in RF beacon cell 323, 333. The decoded beacon entity identifier may be reported together with the measured radio RF field-strength towards the serving base station entity 311. The method 10 may hence comprise detecting an identifier from the second signal, providing the identifier with the measurement results, and controlling access to services further based on the identifier, wherein the identifier is static or dynamic.

For example, Physical Cell ID (PCI) may be used as identifier for radio transmitters 321. 331. PCI is a fundamental parameter in mobile networks like LTE and 5G, serving as a physical layer identifier that enables UEs to distinguish between different cells. Each cell is assigned a PCI, which is derived from the Primary Synchronization Signal (PSS) and Secondary Synchronization Signal (SSS) broadcast by the cell. In LTE, there are 504 unique PCIs (0-503), while 5G New Radio (NR) supports 1008 PCIs (0-1007). Another example is using a Cell Global Identity (CGI) as identifier. In 3GPP systems, Automatic Neighbor Relation (ANR) and CGI) enable efficient network operation and mobility management. ANR is a Self-Organizing Network (SON) feature that automates the process of building and maintaining neighbor cell lists within a base station (like an eNB in LTE or gNB in 5G NR). This automation reduces manual intervention and optimizes handover performance. When a UE detects a new, previously unknown neighboring cell (identified by its PCI), the serving cell's ANR function can instruct the UE to read and report the CGI of this new cell. The CGI, or its E-UTRAN equivalent ECGI, is a globally unique identifier for that cell, typically composed of the Mobile Country Code (MCC), Mobile Network Code (MNC), and Cell Identity (CI). Once the ANR function obtains the CGI, it can update its neighbor relation table (NRT), enabling the establishment of necessary communication paths (like an X2 interface in LTE) to this newly identified neighbor cell, thereby ensuring seamless handovers and robust network connectivity.

Hence the base station 311 may request the UE 311 to decode the CGI for the reported frequency/PCI, e.g. from transmitter 321, and to report the decoded CGI back to the base station 311. This mechanism may take a little longer, but the number of potential CGls is way higher than the number of PCIs, thereby establishing an additional reliability measure, especially when changing the CGI dynamically. This mechanism is also indicated in Fig. 4 as optional steps between (dotted lines) before access control.

In the base station entity 311 a list of deployed beacon entities 321, 331 together with their downlink frequency (-ies) and beacon entity identities can be stored. The beacon identifier (s) in the measurement reports from UE 202, 204 is then compared with the list of stored beacon identifier (s) in the base station entity 311. Only valid pairs of radio frequency measurement (s) and beacon identifier (s) should be considered in the above-described service request decision for the UE 202, 204 in the base station entity 311.

The identifier of each beacon entity may be dynamic. To improve the robustness of the RF beacon identifier solution against abuse, like an installation of a clone of the RF-beacon entity 321, 331 in the radio cell area 312 of base station entity 311 but outside of the protection area 313 to disturb the regular mobile communication service, also dynamic identifiers can be used. Therefor the process of the change of the used identifier in the RF-beacon entity 321, 331 has to be time-synchronized with the configuration database with the allowed identifiers in the base station entity 311.

Some involvement of a user database may be used in further examples. A further step in the decision procedure may be implemented to differentiate users, means their SIMs (Subscriber Identity Module) in their UEs, when they are identified as user inside the protection area 313, like the user equipment 202. The base station entity 311 may request from a database with user/SIM-card specific policies if the service access in the protected area 313 is allowed from the mobile operator or forbidden. The controlling 16 of the access is then further based on a user identification of the UE and/or a data base indicating a service policy. In case that several radio base station entities cover the protection area 313 or if several protection areas exist this functionality can also be located in the core network 520 of the mobile network operator to use one single instance to manage the related right of the user/SIM-card, as e.g. the home location register (HLR). It is noted that once database access based on user identity is enabled, there are multiple other options for treating the service request, e.g. priorities for different services or users can be stored in the database and be applied during the decision process.

As outlined in Fig. 2 option 1b a UE-based mobile service rejection may be used in some examples. The base station entity 311 may transmit in its broadcast signaling message the frequency (-ies) together with a maximal allowed beacon field-strength threshold and a validity time. In case that the maximum allowed beacon RF field-strength threshold is violated for a UE like 202 camping in radio cell 312 or registered or connected to the radio cell 311, the UE shall prohibit to request a radio bearer within the time, defined by the corresponding validity timer. In case that the validity timer expires the UE 202 has to repeat the measurements and search for the radio frequency (-ies) of the RF beacon entities as transmitted in the broadcast signaling message of base station entity 311. Hence, in some examples the denying of a service access is time-limited by a predefined denial time. The predefined denial-time may be preconfigured or indicated by a network entity 311 of the mobile communication system 500.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (10) for controlling service access of user equipment (200; 202; 204; 206), UE, in a mobile communication system (400; 500; 600), the method (10) comprising
registering (12) the UE (200; 202; 204; 206) in a cell (312) of the mobile communication system (400; 500; 600) based on a first signal received at the UE (200; 202; 204; 206) from a base station (300; 302; 311) of the mobile communication system (400; 500; 600);
obtaining (14) measurement results, which are based on measuring at least one second signal received from a radio transmitter (310; 321; 331; 350), being different from the base station (300; 302; 311), at the UE (200; 202; 204; 206); and
controlling (16) access to services of the cell (312) of the mobile communication system (400; 500; 600) dependent/based on the measurement results.

2. The method (10) of claim 1, wherein the controlling (16) comprises denying service access for the UE (200; 202; 204; 206) if the measurement results indicate that the UE (200; 202; 204; 206) is in a non-service area (313), or wherein the controlling (16) comprises denying service access for the UE (200; 202; 204; 206) if the UE (200; 202; 204; 206) has not measured the second signal.

3. The method (10) of claim 2, wherein the controlling (16) of the access comprises evaluating a signal strength of the second signal against predefined signal strength characteristics being indicative for the UE (200; 202; 204; 206) to be inside or outside the non-service area (313).

4. The method (10) of one of the claims 2 or 3, wherein the denying is time limited by a predefined denial time.

5. The method (10) of claim 4, wherein the predefined denial time is indicated by a network entity (300; 302; 311) of the mobile communication system (400; 500; 600).

6. The method (10) of one of the claims 1 to 5, further comprising detecting an identifier from the second signal, providing the identifier with the measurement results, and controlling access to services further based on the identifier, wherein the identifier is static or dynamic.

7. The method (10) of one of the claims 1 to 6, further comprising using an indication on whether the second signal should be measured at the UE (200; 202; 204; 206) and wherein the obtaining (14) of the measurement results is performed after the indication is provided and/or wherein the obtaining (14) further comprises determining a timing advance value for the cell (312) of the mobile communication system (400; 500; 600) and wherein the controlling (16) is further based on the timing advance value.

8. The method (10) of one of the claims 1 to 7, wherein the obtaining (14) of the measurement results is performed after a service request of the UE (200; 202; 204; 206).

9. The method (10) of claim 8, wherein a radio frequency of the second signal is determined after the service request.

10. The method (10) of one of the claims 1 to 9, wherein the obtaining (14) of the measurement results comprises using a measurement report to represent the measurement results, wherein the measurement report is empty in case the second signal is too weak to be measured.

11. The method (10) of one of the claims 1 to 10, wherein the controlling (16) of the access is further based on a signal strength threshold for the second signal.

12. The method (10) of one of the claims 1 to 11, wherein the controlling (16) of the access is further based on a user identification of the UE (200; 202; 204; 206) and/or a data base indicating a service policy.

13. An apparatus (20) for user equipment (200; 202; 204; 206), UE, of a mobile communication system (400; 500; 600), the apparatus (20) comprising
one or more interfaces (22) configured to communicate in the mobile communication system (400; 500; 600); and
one or more signal processing devices (24) configured to process signals communicated in the mobile communication system (400; 500; 600) using the one or more interfaces (22),
wherein the one or more signal processing devices (24) are further configured to perform one of the methods (10) of claims 1 to 12.

14. An apparatus (30) for a network entity (300; 302; 311) of a mobile communication system (400; 500; 600), the apparatus (30) comprising
one or more interfaces (32) configured to communicate in the mobile communication system (400; 500; 600); and
one or more signal processing devices (34) configured to process signals communicated in the mobile communication system (400; 500; 600) using the one or more interfaces (34), wherein the one or more signal processing devices (34) are further configured to perform one of the methods (10) of claims 1 to 12.

15. A computer program having a program code for performing one of the methods (10) of one of the claims 1 to 12, when the computer program is executed on a computer, a processor, or a programmable hardware component.
